(19) **Europäisches Patentamt**

**European Patent Office**

**Office européen des brevets**

(11) **EP 0 987 516 A1**

(12) **EUROPÄISCHE PATENTANMELDUNG**

(43) Veröffentlichungstag:
22.03.2000 Patentblatt 2000/12

(51) Int. Cl.[7]: **G01B 7/00**, G01B 7/02,
B23K 3/06

(21) Anmeldenummer: **98810921.1**

(22) Anmeldetag: **15.09.1998**

(84) Benannte Vertragsstaaten:
**AT BE CH CY DE DK ES FI FR GB GR IE IT LI LU MC NL PT SE**
Benannte Erstreckungsstaaten:
**AL LT LV MK RO SI**

(71) Anmelder:
• **ESEC Management SA**
**6330 Cham (CH)**

• **ESEC SA**
**CH-6330 Cham/Steinhausen (CH)**

(72) Erfinder:
• **Mannhart, Eugen**
**6330 Cham (CH)**
• **Günther, Thomas**
**8800 Thalwill (CH)**

(54) **Einrichtung zur Erfassung des Zeitpunktes, an dem sich zwei elektrisch leitende Körper oder ein elektrisch leitender Körper und ein elektrisch leitender Flüssigkeitstropfen berühren**

(57)    Eine Einrichtung mit einem Messmittel (15) zur Erfassung des Zeitpunktes, an dem sich ein erster, elektrisch leitender Körper (6) und ein zweiter, elektrisch leitender Körper (3) oder ein von einem zweiten Körper geführter, elektrisch leitender Flüssigkeitstropfen berühren, umfasst einen Transformator (9) und einen Wechselspannungsgenerator (11). Die Primärwicklung (10) des Transformators (9) wird vom Wechselspannungsgenerator (11) mit einer wechselförmigen Spannung ($U_P$) beaufschlagt. Der erste Körper (6) und der zweite Körper (3) bzw. die Flüssigkeit sind mit der Sekundärwicklung (14) des Transformators (9) elektrisch verbunden. Die an der Primärwicklung (10) des Transformators (9) anliegende Spannung ($U_P$) ist abhängig vom Zustand - hochohmig, wenn sich die beiden Körper nicht berühren oder niederohmig, wenn sich die beiden Körper berühren - der Sekundärwicklung (14). Das Messmittel (15) erfasst die an der Primärwicklung (10) des Transformators (9) ligende Spannung ($U_P$) und bildet daraus ein digitales Signal, das angibt, ob sich die beiden Körper berühren oder nicht.

Fig. 1

**Beschreibung**

Die Erfindung betrifft eine Einrichtung zur Erfassung des Zeitpunktes, an dem sich zwei elektrisch leitende Körper oder ein elektrisch leitender Körper und ein elektrisch leitender Flüssigkeitstropfen berühren.

Aus der europäischen Patentanmeldung EP 752294 ist eine Vorrichtung zum Auftragen von flüssigem Lot bekannt. Bei dieser Vorrichtung wird ein nach unten offener, metallischer Formstempel auf ein metallisches Werkstück abgesenkt. Sobald der Formstempel das Werkstück berührt, wird der Formstempel mit Lot gefüllt. Beim darauffolgenden Abheben des Formstempels bleibt eine vorbestimmte Lotmenge auf dem Werkstück zurück. Dieser Vorgang wiederholt sich mit einer hohen Taktrate. Damit eine hohe Taktrate erzielt werden kann, ist es erforderlich, dass der Zeitpunkt, an dem der Formstempel und das Werkstück in Berührung kommen, zuverlässig erfasst wird. In solchen und ähnlichen Einrichtungen benützte Messeinrichtungen sehen vor, das Werkstück elektrisch mit der Masse der Vorrichtung zu verbinden und den Formstempel mit einer Gleichspannung von beispielsweise 5 Volt gegenüber dieser Masse zu beaufschlagen. Es hat sich nun gezeigt, dass solche Einrichtungen aus verschiedenen Gründen nicht immer zuverlässig funktionieren. Zum einen kommt es selbst bei Begrenzung des Stromes, der während der Dauer der Berührung von Formstempel und Werkstück von der Spannungsquelle über den Formstempel zur Masse fliesst auf 0.5 mA zur Funkenbildung. Zum anderen kann es vorkommen, dass der Formstempel ungewollt mit weiteren Spannungssignalen beaufschlagt wird, die zu falschen Messresultaten führen. Solche Spannungssignale stammen insbesondere von der Heizeinrichtung, mit der der Formstempel oder den Formstempel haltende Teile der Vorrichtung zur Verflüssigung des Lotes erwärmt werden.

Der Erfindung liegt die Aufgabe zugrunde, eine Messeinrichtung vorzuschlagen, die die vorgenannten Nachteile nicht aufweist.

Die genannte Aufgabe wird erfindungsgemäss gelöst durch die Merkmale des Anspruchs 1.

Die Lösung der Aufgabe gelingt dadurch, dass die Messeinrichtung sowohl vom Formstempel als auch vom Werkstück galvanisch getrennt wird. Eine besonders elegante Lösung ergibt sich, wenn als galvanisches Trennglied ein Transformator verwendet wird. Die Sekundärwicklung des Transformators wird dabei einerseits mit dem Werkstück und andererseits mit dem Formstempel verbunden. Die Primärwicklung wird an einen Wechselspannungsgenerator angeschlossen.

Nachfolgend werden Ausführungsbeispiele der Erfindung anhand der Zeichnung näher erläutert.

Es zeigen:

Fig. 1    eine Vorrichtung zum Auftragen von flüssigem Lot auf ein Werkstück mit einer erfindungsgemässen Messeinrichtung,

Fig. 2    Spannungsdiagramme, und

Fig. 3    eine weitere Messeinrichtung.

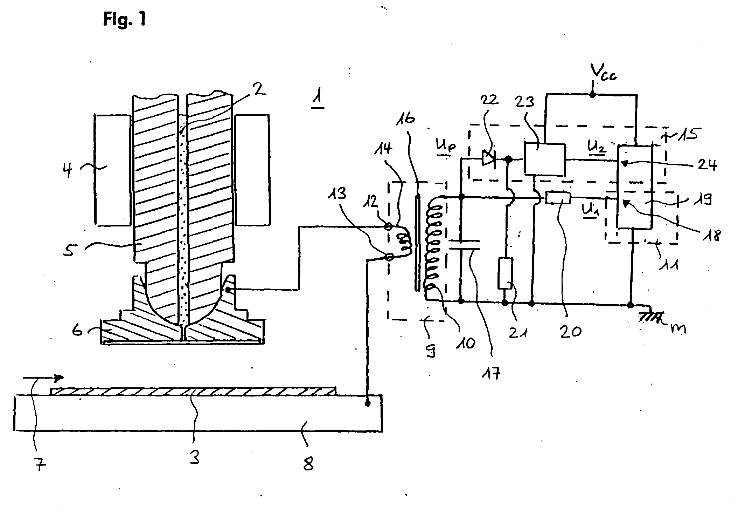

Die Fig. 1 zeigt in schematischer Darstellung eine Vorrichtung 1 zum taktweisen Auftragen von flüssigem Lot 2 auf ein metallisches Werkstück 3, wie sie beispielsweise aus der europäischen Patentanmeldung EP 752294 bekannt ist. Die Vorrichtung 1 umfasst einen mittels einer Heizung 4 heizbaren Behälter 5 zur Aufnahme des Lots 2. Am Behälter 5 ist ein metallischer Formstempel 6 gelenkig angebracht. Der Formstempel 6 weist einen nach unten offenen Formhohlraum auf. Das Werkstück 3 wird taktweise mit nicht näher dargestellten Mitteln in Richtung des Pfeiles 7 auf einer Auflage 8 vorgeschoben bzw. gehalten und ist in elektrischem Kontakt mit der Auflage 8. Die Vorrichtung 1 weist eine Einrichtung auf zur Erfassung des Zeitpunktes, an dem der Formstempel 6 jeweils das Werkstück 3 berührt. Die Einrichtung umfasst einen Transformator 9, dessen Primärwicklung 10 mit einem Wechselspannungsgenerator 11 verbunden ist. Der Wechselspannungsgenerator 11 speist die Primärwicklung 10 des Transformators 9 mit einer gegenüber einem Bezugspotential m wechselförmigen Spannung $U_P$ Die beiden Enden 12 und 13 der Sekundärwicklung 14 des Transformators 9 sind mit dem Formstempel 6 bzw. mit der Auflage 8 und damit natürlich auch mit dem Werkstück 3 elektrisch verbunden.

Wenn der Formstempel 6 das Werkstück 3 nicht berührt, dann sind die beiden Enden 12 und 13 der Sekundärwicklung 14 des Transformators 9 hochohmig getrennt. Sobald der Formstempel 6 hingegen das Werkstück 3 berührt, dann sind die beiden Enden 12 und 13 der Sekundärwicklung 14 des Transformators 9 im Idealfall kurzgeschlossen oder wechselspannungsmässig wenigstens nur niederohmig getrennt. Diese beiden Zustände der Sekundärwicklung 14 - hochohmig oder niederohmig - werden mittels eines Messmittels 15 erfasst und entsprechend in ein digitales Signal "0" oder "1" umgewandelt. Der Transformator 9 weist vorzugsweise einen Kern 16 aus Ferrit auf.

Bei einem ersten Ausführungsbeispiel, das nun näher erläutert wird, ist ein Kondensator 17 parallel zur Primärwicklung 10 des Transformators 9 geschaltet. Als Wechselspannungsgenerator 11 dient ein Ausgang 18 eines Mikroprozessors 19. Der Ausgang 18 ist über einen Widerstand 20 mit dem einen Ende der Primärwicklung 10 verbunden, während das andere Ende der Primärwicklung 10 mit dem Bezugspotential m verbunden ist. Das Messmittel 15 umfasst eine mit einem Widerstand 21 belastete, als Gleichrichter wirkende Diode 22, einen nachgeschalteten Schmitt-Trigger 23 und einen Eingang 24 des Mikroprozessors 19. Die Anode der Diode 22 ist mit dem einen Ende der Primärwicklung 10 des Transformators 9 verbunden. Der Schmitt-Trigger 23 und der Mikroprozessor 19 sind mit einer Spannung $V_{CC}$ unipolar gegenüber dem Bezugspotential m gespeist. Der Schmitt-Trigger 23 wandelt die an seinem Eingang anliegende, gleichgerichtete Wechselspannung, sofern deren Amplitude einen vorbestimmten Wert übersteigt, in eine Folge von Rechteckimpulsen, deren Frequenz der Mikroprozessor 19 erfasst.

Im Betrieb führt der Ausgang 18 des Mikroprozessors 19 eine rechteckförmige Spannung $U_1$, deren Frequenz f einige 10 kHz bis einige 100 kHz beträgt. Die Kapazität C des Kondensators 17 ist so an die Induktivität L der Primärwicklung 10 des Transformators 9 angepasst, dass gilt

$$f \cong \frac{1}{2\pi\sqrt{LC}}.$$

Im hochohmigen, d.h. unbelasteten Zustand der Sekundärwicklung 14, wenn sich also der Formstempel 6 und das Werkstück 3 nicht berühren, ist die Spannung $U_P$ über der Primärwicklung 10 sinusförmig und weist ebenfalls die Frequenz f auf. Am Eingang 24 des Mikroprozessors 19 erscheint somit eine Folge von rechteckförmigen Impulsen der Frequenz f. Im niederohmigen, d.h. belasteten Zustand der Sekundärwicklung 14, wenn sich also der Formstempel 6 und das Werkstück 3 berühren, verschwindet die Spannung $U_P$ über der Primärwicklung 10 vollständig oder ihre Amplitude ist zumindest sehr gering, sodass am Eingang 24 des Mikroprozessors 19 keine Impulse erscheinen. Der Mikroprozessor 19 ist somit in der Lage, anhand der Frequenz der an seinem Eingang 24 anliegenden Spannung $U_2$ den Zeitpunkt zu bestimmen, an dem der Formstempel 6 und das Werkstück 3 in Berührung kommen.

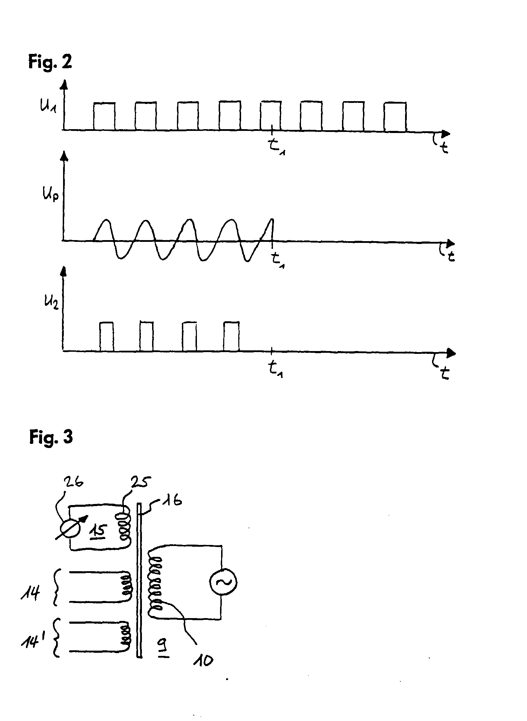

Die Fig. 2 zeigt zur Verdeutlichung die Spannungen $U_1$, $U_P$ und $U_2$ im Verlauf der Zeit t, wobei der Formstempel 6 und das Werkstück 3 infolge Absenkens des Formstempels 6 gegen das Werkstück 3 am Zeitpunkt $t_1$ in Berührung kommen.

Das Windungsverhältnis der Primärwicklung 10 zur Sekundärwicklung 14 beträgt vorzugsweise etwa 10:1, sodass die Spannung über der Sekundärwicklung 14 typischerweise etwa im Bereich von nur einem Volt liegt. Die Spannung $U_P$ ist andererseits ausreichend gross, so dass elektromagnetische Störungen keine Beeinträchtigung des Messresultates zur Folge haben.

Der Formstempel 6 stellt einen ersten, elektrisch leitenden Körper, das Werkstück 3 stellt einen zweiten, elektrisch leitenden Körper dar. In dem anhand der Fig. 1 dargestellten Beispiel ist das Ende 12 der Sekundärwicklung 14 des Transformators 9 direkt mit dem Formstempel 6 elektrisch verbunden, während das Ende 13 der Sekundärwicklung 14 über die Auflage 8 mit dem Werkstück 3 elektrisch verbunden ist. Die konkrete Art und Weise, wie die elektrische Verbindung erfolgt, ist nicht wichtig. Es ist nun auch möglich, dass bei der Vorrichtung 1 der Formstempel 6 weggelassen ist und dass an der Mündung des Behälters 5 jeweils ein Tropfen flüssigen Lots 2 gebildet wird. Da das flüssige Lot 2 elektrisch leitet, kann auch der Zeitpunkt erfasst werden, an dem der Lottropfen das Werkstück 3 berührt. Dazu ist nur sicherzustellen, das das Lot 2 elektrisch mit dem Ende 12 der Sekundärwicklung 14 verbunden ist.

Bei einem zweiten, in der Fig. 3 dargestellten Ausführungsbeispiel umfasst das Messmittel 15 eine weitere Wicklung 25, die parallel zur Sekundärwicklung 14 auf dem Kern 16 des Transformators 9 gewickelt ist, und eine Messschaltung 26. Mit einer solchen Ausgestaltung des Messmittel 15 ist es möglich, den Zustand - hochohmig oder niederohmig - mehrerer Sekundärwicklungen 14, 14', ... bei kleinstem Schaltungsaufwand zu erfassen. Die Messschaltung 26 kann beispielsweise analog der in der Fig. 1 dargestellten Schaltung aufgebaut sein. Ist der Zustand aller Sekundärwicklungen 14, 14', ... hochohmig, dann liegt über der Wicklung 25 eine wechselförmige Spannung. Ist der Zustand wenigstens einer der Sekundärwicklungen 14, 14', ... niederohmig, dann verschwindet die Spannung über der Wicklung 25. Die Messschaltung 26 erfasst die Spannung über der Wicklung 25 und bildet daraus ein digitales Signal, das angibt, ob wenigstens eine der Sekundärwicklungen 14, 14', ... niederohmig ist.

**Patentansprüche**

1.  Einrichtung mit einem Messmittel (15) zur Erfassung des Zeitpunktes, an dem sich ein erster, elektrisch leitender Körper (6) und ein zweiter, elektrisch leitender Körper (3) oder ein von einem zweiten Körper geführter, elektrisch leitender Flüssigkeitstropfen berühren, **dadurch gekennzeichnet, dass** die Einrichtung einen Transformator (9) und einen Wechselspannungsgenerator (11) umfasst, dass die Primärwicklung (10) des Transformators (9) vom Wechselspannungsgenerator (11) mit einer wechselförmigen Spannung ($U_P$) beaufschlagt wird, und dass der erste Körper (6) und der zweite Körper (3) bzw. die Flüssigkeit mit der Sekundärwicklung (14) des Transformators (9) elektrisch verbunden sind.

2.  Einrichtung nach Anspruch 1, **dadurch gekennzeichnet, dass** das Messmittel (15) die an der Primärwicklung (10) des Transformators (9) ligende Spannung ($U_P$) erfasst und auswertet.

3.  Einrichtung nach Anspruch 1, **dadurch gekennzeichnet, dass** der Transformator (9) eine weitere Wicklung (25) aufweist und dass das Messmittel (15) die an der weiteren Wicklung (25) des Transformators (9) anliegende Spannung erfasst und auswertet.

4.  Einrichtung nach Anspruch 3, **dadurch gekennzeichnet, dass** der Transformator (9) mehrere Sekundärwicklungen (14, 14', ...) aufweist.

5. Einrichtung nach einem der Ansprüche 1 bis 4, **dadurch gekennzeichnet, dass** der erste Körper ein Formstempel (6) einer Vorrichtung zum Auftragen von flüssigem Lot (2) auf ein Werkstück (3) ist, und dass das Werkstück (3) oder eine das Werkstück (3) aufnehmende Auflage (8) der zweite Körper ist.

Fig. 1

**Fig. 2**

**Fig. 3**

Europäisches
Patentamt

# EUROPÄISCHER RECHERCHENBERICHT

Nummer der Anmeldung

EP 98 81 0921

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int.Cl.6) |
|---|---|---|---|
| X | GB 2 025 073 A (ROLLS ROYCE;RENISHAW ELECTRICAL LTD) 16. Januar 1980<br>* das ganze Dokument * | 1,2 | G01B7/00<br>G01B7/02<br>B23K3/06 |
| D,A | EP 0 752 294 A (ESEC SA) 8. Januar 1997<br>* das ganze Dokument * | 1,4 | |
| X | US 4 110 740 A (AKITA SIGEYUKI ET AL) 29. August 1978<br>* Spalte 1, Zeile 23 – Spalte 2, Zeile 22; Abbildungen 1,3 *<br>* Spalte 2, Zeile 45 – Spalte 3, Zeile 51 * | 1,2 | |
| X | GB 2 254 429 A (BIRT ELECTRONIC SYSTEMS LTD) 7. Oktober 1992<br>* das ganze Dokument * | 1,3,4 | |
| A | PATENT ABSTRACTS OF JAPAN vol. 097, no. 005, 30. Mai 1997<br>& JP 09 005012 A (OSAKA ASAHI KAGAKU KK), 10. Januar 1997<br>* Zusammenfassung * | 1,4 | |
| | | | **RECHERCHIERTE SACHGEBIETE (Int.Cl.6)**<br><br>G01B<br>B23K<br>G01F |

Der vorliegende Recherchenbericht wurde für alle Patentansprüche erstellt

| Recherchenort | Abschlußdatum der Recherche | Prüfer |
|---|---|---|
| DEN HAAG | 3. März 1999 | Brock, T |

EPO FORM 1503 03.82 (P04C03)

**ANHANG ZUM EUROPÄISCHEN RECHERCHENBERICHT
ÜBER DIE EUROPÄISCHE PATENTANMELDUNG NR.**

EP 98 81 0921

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

03-03-1999

| Im Recherchenbericht angeführtes Patentdokument | Datum der Veröffentlichung | Mitglied(er) der Patentfamilie | Datum der Veröffentlichung |
|---|---|---|---|
| GB 2025073 A | 16-01-1980 | CH 639309 A | 15-11-1983 |
| | | DE 2927525 A | 17-01-1980 |
| | | FR 2430622 A | 01-02-1980 |
| | | JP 1295745 A | 29-11-1989 |
| | | JP 3046257 B | 15-07-1991 |
| | | JP 55036798 A | 14-03-1980 |
| | | JP 63003242 B | 22-01-1988 |
| | | SE 450418 B | 22-06-1987 |
| | | SE 7905647 A | 08-01-1980 |
| | | US 4339714 A | 13-07-1982 |
| EP 0752294 A | 08-01-1997 | KEINE | |
| US 4110740 A | 29-08-1978 | KEINE | |
| GB 2254429 A | 07-10-1992 | KEINE | |

EPO FORM P0461

Für nähere Einzelheiten zu diesem Anhang : siehe Amtsblatt des Europäischen Patentamts, Nr.12/82